# EUROPEAN PATENT SPECIFICATION

(11) **EP 4 541 609 B1**
(45) Date of publication and mention of the grant of the patent: **14.01.2026**
(21) Application number: 24205974.9
(22) Date of filing: 10.10.2024
(51) Int. Cl.: B60G 9/00, B60G 13/00

(54) **TRANSPORT VEHICLE IN GENERAL WITH A LOAD BALANCING SYSTEM**
STABILISIERUNGSSYSTEM FÜR EINE FAHRZEUGAUFHÄNGUNG
SYSTÈME DE STABILISATION POUR UNE SUSPENSION DE VÉHICULE

(30) Priority: 16.10.2023 IT 202300021480
(43) Date of publication of application: 23.04.2025
(73) Proprietor: Capalbo, Lenin, 23823 Colico (LC) (IT)
(72) Inventor: Capalbo, Lenin, 23823 Colico (LC) (IT)
(74) Representative: Praxi Intellectual Property Milano

(56) References cited:
- JP-A- H10 315 729
- US-A- 2 755 100

## Description

### BACKGROUND OF THE INVENTION

The present invention concerns transport vehicle in general, provided with a new system for balancing loads on the platform of the aforesaid transport vehicle.

The field of the invention is that of equipment that is employed to prevent loads positioned on coaches, semi-trailer trucks and other means of transport in general, from causing unbalancing thereof when the trajectory varies, for example on a curve, when braking, or simply due to incorrect positioning of the load on the platform of the vehicle.

The systems currently employed for this purpose use stabilizer bars, which however only minimally offset phenomena of unbalanced loads, always leaving a residual tilt angle, relative to the axle of the wheels, of the platform that supports it.

The publication JP H10 315729 A concerns a lateral control structure of a vehicle with spring suspension.

The publication US 2 755 100 A concerns a rear suspension for motor vehicles.

### SUMMARY OF THE INVENTION

Therefore, the main object of the present invention is to provide a vehicle with an improved system for supporting loads on the platform which, compared to similar equipment of the prior art, is able to prevent phenomena of unbalancing of the loads.

This and other objects are achieved with the vehicle of claim 1. Preferred embodiments of the invention appear in the remaining claims.

In comparison with the prior art vehicles, provided with systems used to correct unbalancing of the loads on the platform, the vehicle according to the present invention offers the advantage of transforming the tilt of the platform into a lowering movement thereof or a movement towards the axle of the wheels, preserving the desired horizontal alignment even when the vehicle travels around curves.

In this way, the invention offers the important advantage of overcoming the risks of overturning of the means of transport due to unbalancing of the loads. Moreover, the vehicle of the invention also achieves the advantage of reduced and more even consumption of the tyres, of the brakes, of the shock absorbers and of other parts.

### BRIEF DESCRIPTION OF THE DRAWINGS

These and other objects, advantages and features will be apparent from the following description of some preferred embodiments of the vehicle of the invention, illustrated by way of non-limiting example in the figures of the accompanying drawings,
wherein:
- Figs. 1 and 1A illustrate examples di transport vehicles, suitable to be equipped with the system of the invention;
- Fig. 2 illustrates the condition of unbalancing of the platform of a prior art vehicle that is travelling along a stretch of road with a curve;
- Figs. 3 and 3A illustrate a first embodiment of the vehicle of the invention, with balancing system in a condition at rest and of unbalanced load while travelling around a curve, respectively;

- Figs. 4 and 4A illustrate a second embodiment of the vehicle of the invention, with balancing system in a condition at rest and of unbalanced load while travelling around a curve, respectively;
- Figs. 5 and 5A illustrate a third embodiment of the vehicle of the invention, with balancing system in a condition at rest and of unbalanced load while travelling around a curve, respectively;
- Figs. 6 and 6A illustrate, in a front view and in a side view respectively, the detail of the housing of the ends of the rods of the balancing system of the vehicle according to the invention on the loading platform or on the axle of the wheels of the means of transport in Fig. 1; and
- Fig. 7 illustrates in a front view the detail of the pin for coupling the ends of the rods of the balancing system of the vehicle of the invention to the axle of the wheels of the means of transport illustrated in Fig. 1.

### DETAILED DESCRIPTION OF THE PREFERRED EMBODIMENTS

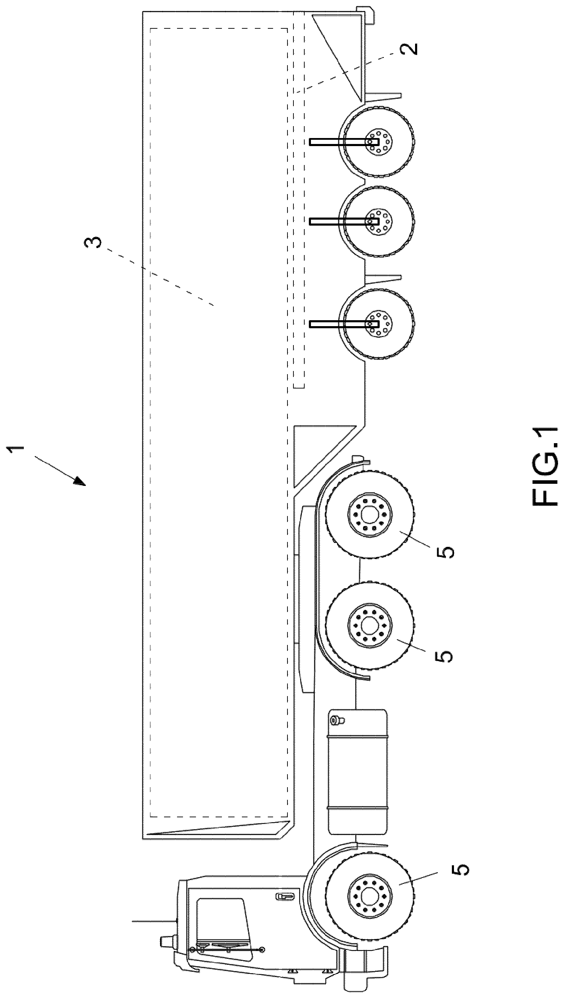

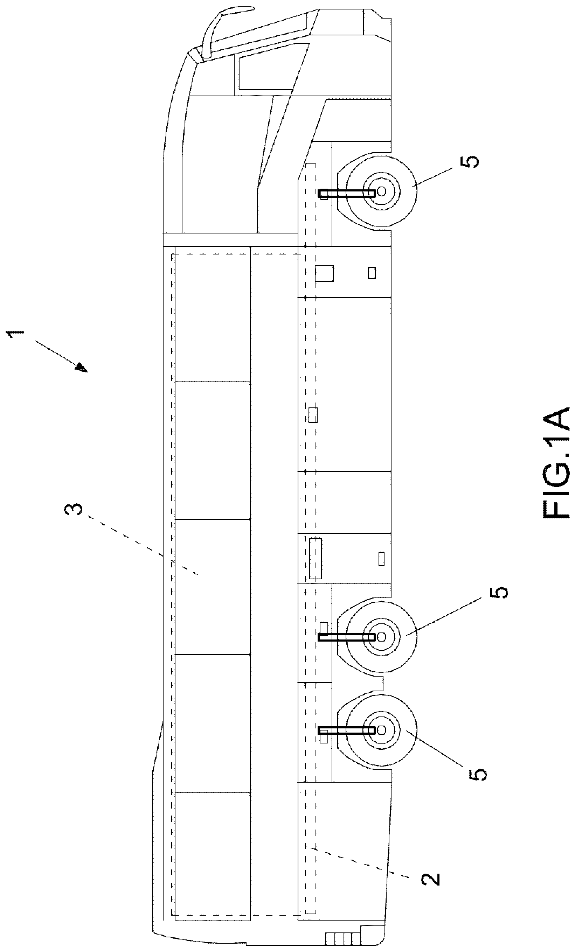

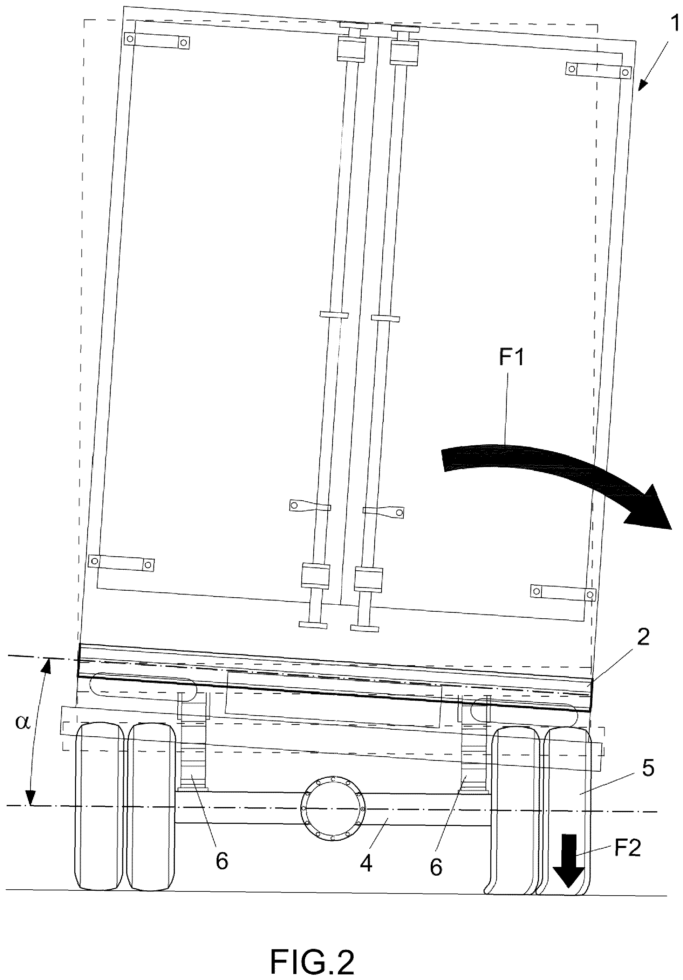

The transport vehicle 1 illustrated in Fig. 1 is a semi-trailer truck, on the platform 2 of which a load 3 is placed. In turn, the platform 2 is conventionally supported on the axle 4 of the wheels 5 by means of respective leaf springs 6 (Fig. 2).

In a system of this type, when the vehicle 1 travels around a curve or on a stretch of road on a slope, or has a load 3 arranged in an unbalanced position, the platform 2 tends to tilt in the direction of the arrow F1 in Fig. 2, tilting by an angle α relative to the axle 4 of the wheels 5, compressing in the direction of the arrow F2 the wheel subject to the greatest unbalancing load.

In these conditions there are evident risks of the vehicle overturning and, in any case, there is increased wear of parts (tyres, brakes, bearings and other parts) subject to the greatest load F2.

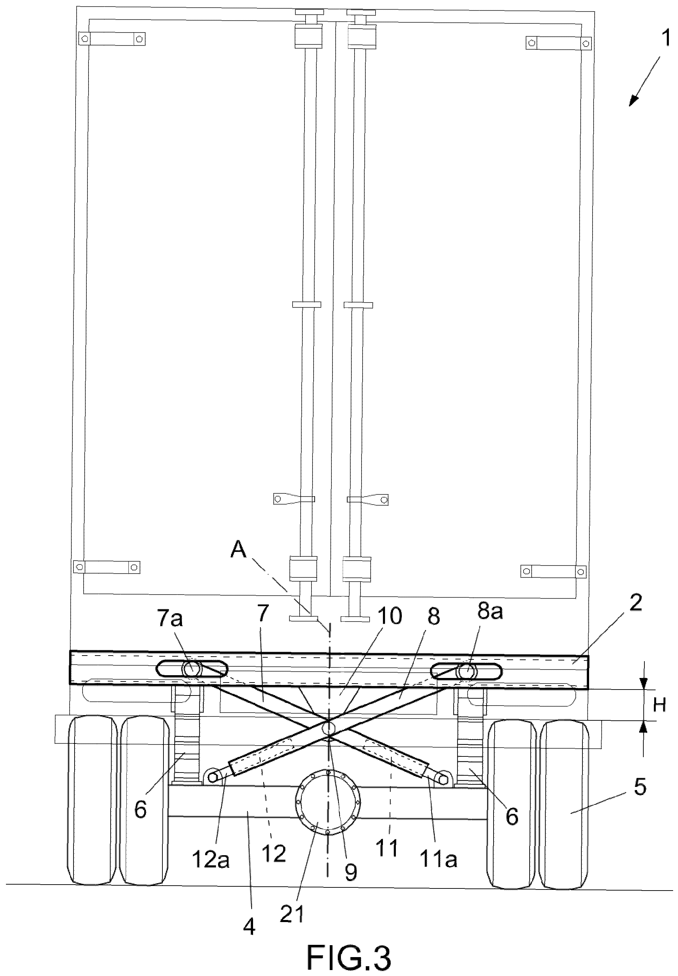

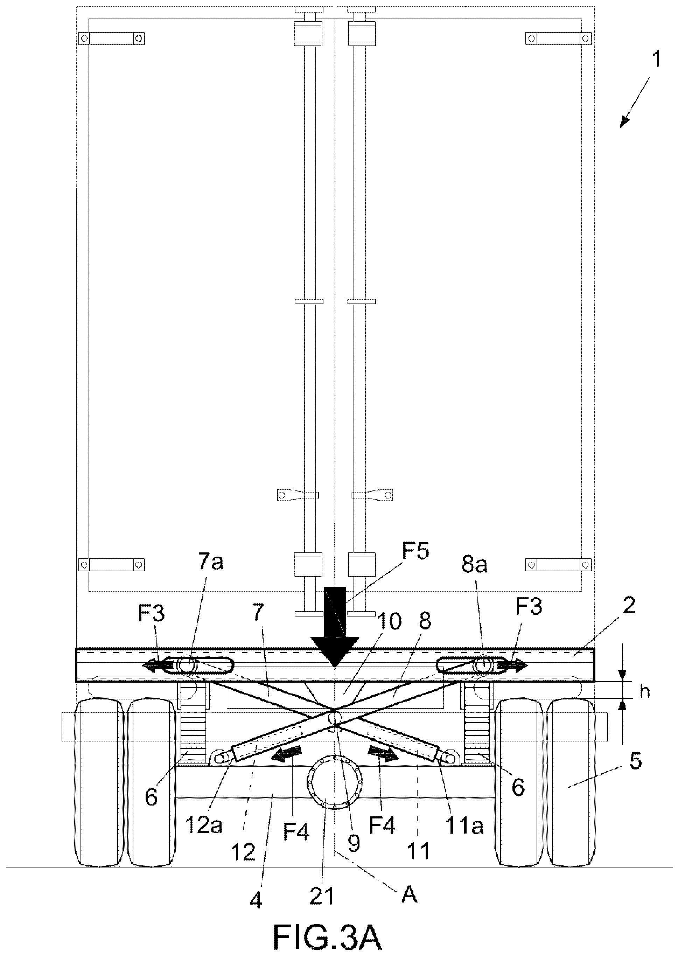

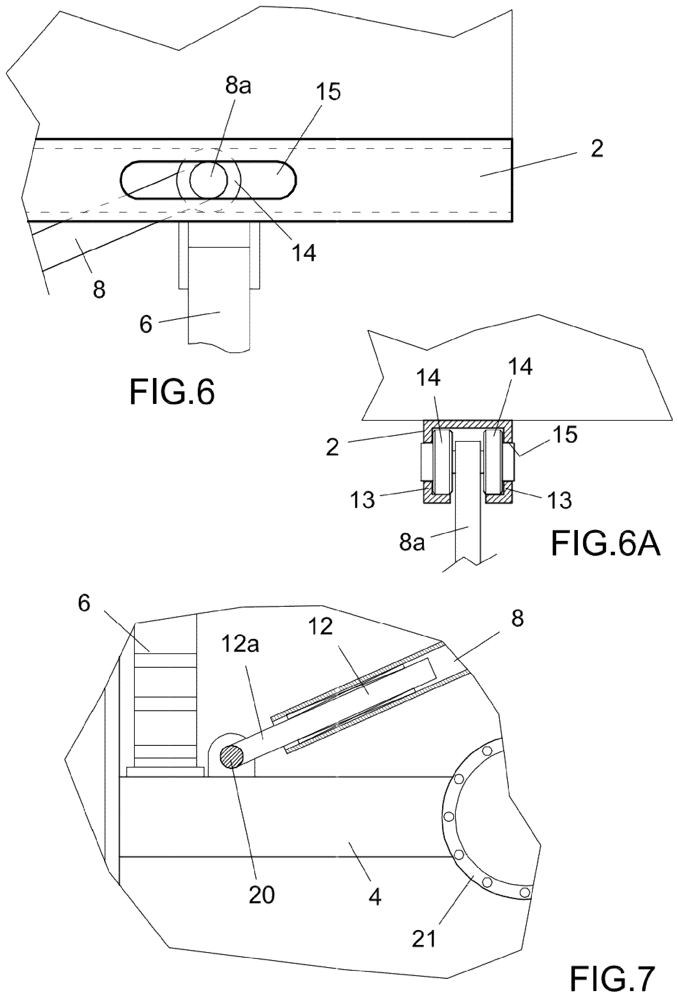

To overcome these drawbacks, the vehicle of the invention comprises the load balancing system illustrated in Figs. 3 and 3A. The aforesaid system comprises two rods 7 and 8 arranged crossed over in an X-shaped scissor-like configuration and mutually pivoted, on their crossing point, at a pin 9. This pin 9 is in turn fixed to a bracket 10, arranged integral with the platform 2 of the vehicle 1, at the axis A perpendicular to the axles 4 of the front and rear wheels 5 and which passes through the joining line of the respective half-axles, i.e., passing through the differential 21. In particular, each rod 7 and 8 has a telescoping structure, carrying bars 11 and 12, respectively, housed sliding inside them (Figs. 3 and 7).

The upper ends 7a and 8a of the rods 7,8 engage sliding inside respective tracks 13 of the platform 2, by means of bearings, bushings 14 and the like (Fig. 6A). Slots 15 are also provided on this platform to allow inspection and access to the described system of tracks 13 and of bearings 14 (Fig. 6).

The lower ends 11a and 12a of the sliding bars 11 and 12 of the rods 7 and 8 are instead pivoted on the axle 4 of the wheels 5, at respective pins 20 (Fig. 7).

The aforesaid rods can be of any geometric shape and made of a material suitable to support the load.

With the system of the vehicle of the invention, and as better represented in Fig. 3A, when there is an unbalancing of the load 3 in the direction of the arrow F2, the upper ends 7a, 8a of the rods 7, 8 are caused to slide, as a result of this unbalancing, on the respective tracks 13 of the platform 2 (arrows F3 in Fig. 3A).

For their part, the bars 11, 12 are caused to slide inside the respective rods 7,8 in the direction of the arrows F4 in Fig. 3A, thereby allowing lowering of the platform 2 in the direction of the arrow F5.

By comparing the above-described Figs. 3 and 3A, it can be observed how, in the presence of an unbalanced load, the initial distance H between the platform 2 and the axle 4 of the wheels 5 is taken to a smaller distance h, while preserving the condition of parallelism between the platform and the axle of the front and rear wheels 5.

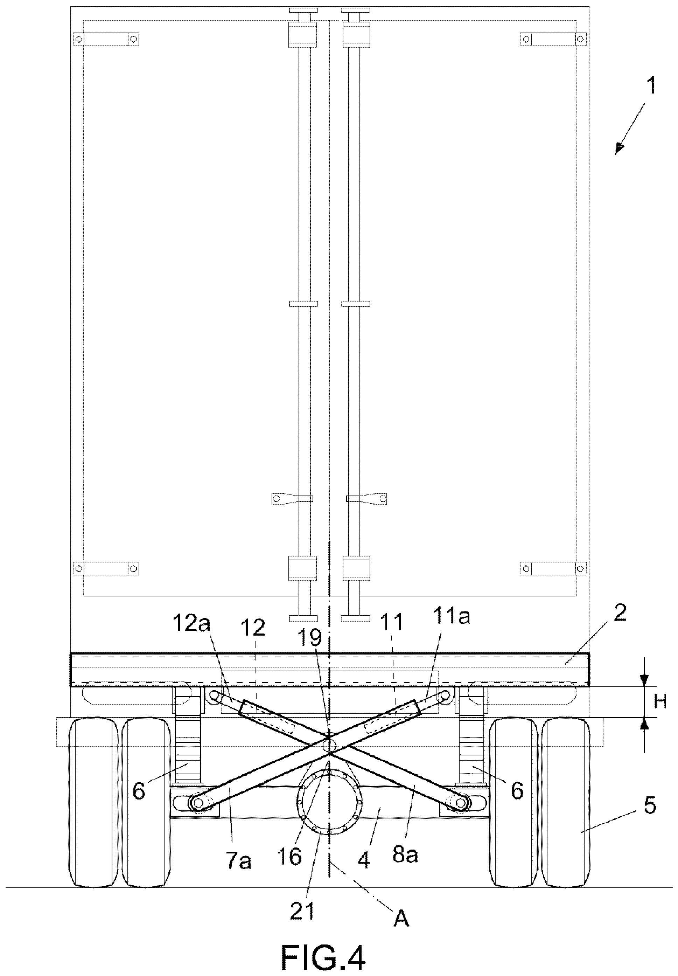

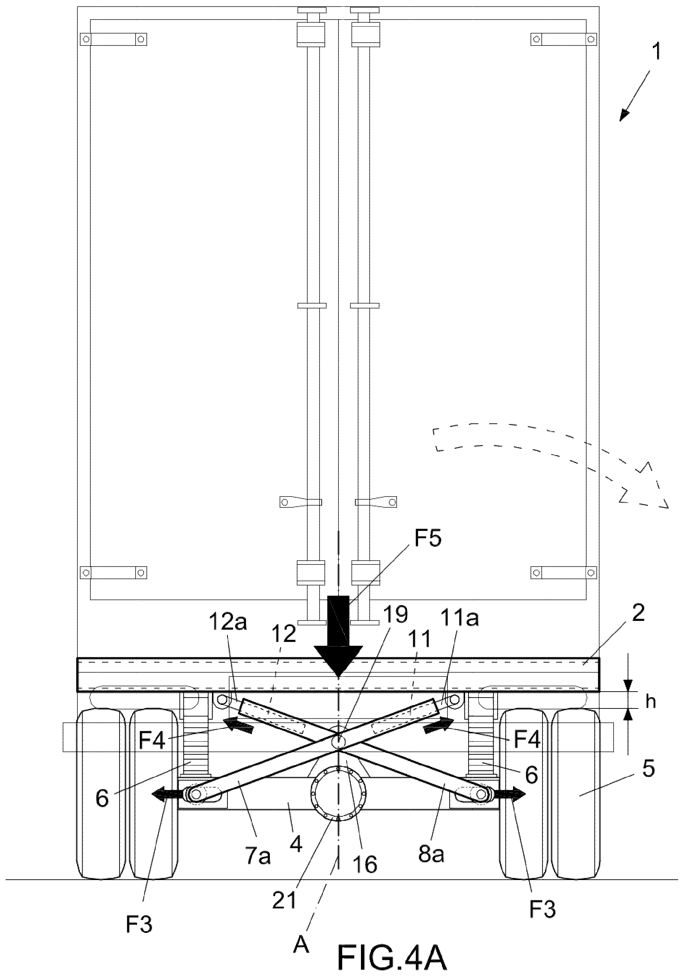

In the variant illustrated in Figs. 4 and 4A, the assembly of tracks 13 and bearings 14 is no longer arranged on the platform 2, but on the axle 4 of the wheels 5, receiving in this position the upper ends 7a, 8a of the rods 7 and 8, the pivot pin 19 of which is fixed to a bracket 16 of the axle 4 of the wheels.

Also in this embodiment, the bracket 16 is arranged at the axis A perpendicular to the axles 4 of the front and rear wheels 5, and which passes through the joining line of the respective half-axles, i.e., passing through the differential 21.

For their part, the lower ends 11a, 12a of the sliding bars 11 and 12 of the rods 7 and 8 are pivoted on the platform 2, maintaining the arrangement represented in Fig. 7.

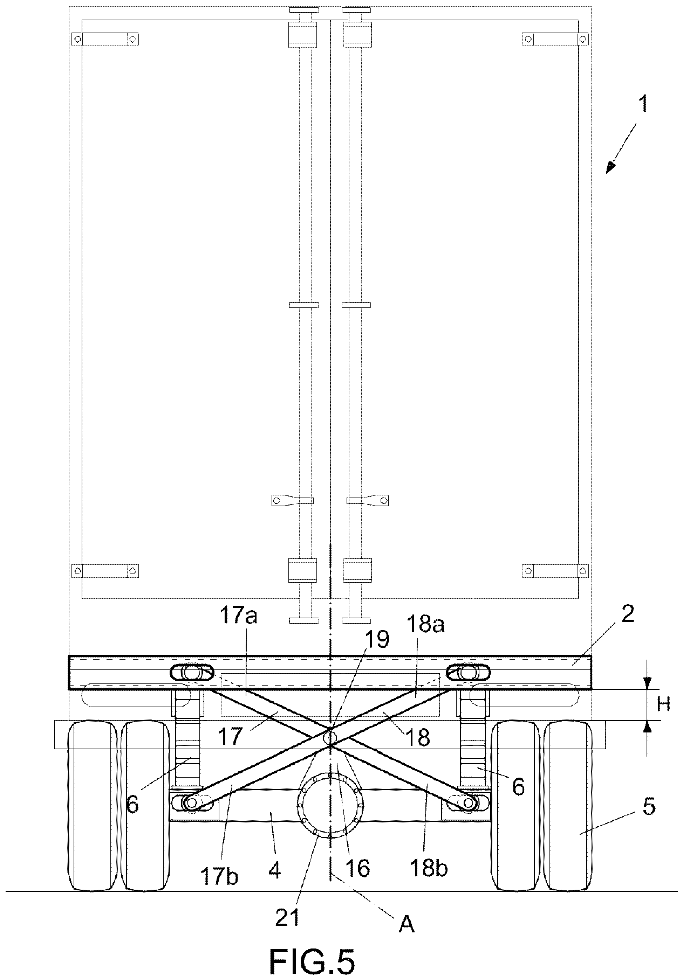

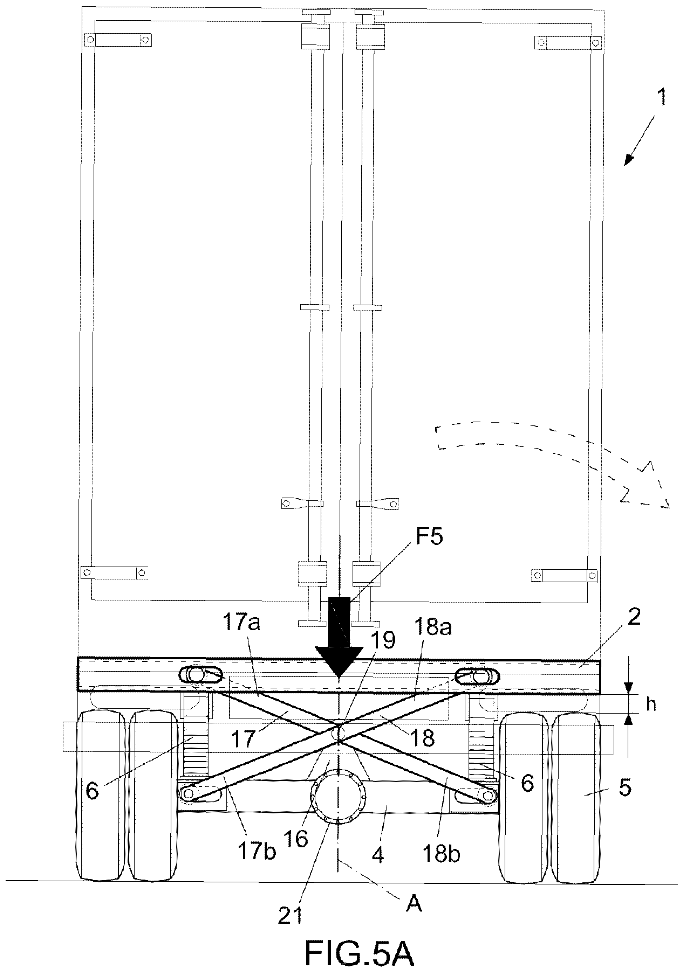

In the variant of Figs. 5 and 5A, the system of the vehicle of the invention comprises rods 17 and 18, arranged crossed over in a scissor-like arrangement at a pin 19 integral with the bracket 16 of the axle 4 of the wheels 5. The arrangement of the bracket 16 and coupling of the ends 17a, 17b, 18a, 18b of the rods 17, 18 on the platform 2 of the vehicle 1 and on the axle 4 of the wheels 5 is the same as described with reference to Figs. 4, 4A, 6 and 6A.

The system of the vehicle of the invention is suitable to be mounted on one or more axles of the wheels of the vehicle illustrated, for example, in Fig. 1, depending on the distribution of the load on the platform 2.

The invention, as described above and illustrated in the accompanying figures, is susceptible to modifications to produce further variants, in any case falling within the scope of the claims below. Thus, for example, the sliding bars 11 and 12 could be fixed both to the axle 4 of the wheels, and to the platform 2 of the vehicle 1.

## Claims

1. A transport vehicle provided with a system for balancing loads on the platform of said vehicle, **characterized in that** said system comprises two rods (7,8;17,18) mutually crossed over in an X-shaped scissor-like configuration and pivoted, on the crossing point, to a pin (9,19) fixed to the platform (2) or to the axle (4) of the wheels (5) of said vehicle (1), at a bracket (10) integral with said platform (2) or at a bracket (16) integral with the axle (4) of the wheels (5), wherein said bracket (10,16) is arranged at the axis (A) perpendicular to the axles (4) of the wheels (5) and which passes through the joining line of the respective half-axles passing through a differential (21), wherein the ends of said rods (7,8;17,18) are mounted sliding and/or rotating on said platform (2) and on the axle (4) of the wheels (5).

2. The vehicle according to claim 1, **characterized in that** said rods (7,8) have a telescoping structure, equipped with bars (11,12) arranged sliding inside the rods (7,8).

3. The vehicle according to claim 2, **characterized in that** the bracket (10) is integral with said platform (2) and said rods (7,8) are mutually pivoted on said pin (9) fixed to the aforesaid bracket (10) of said platform (2), wherein the upper ends (7a,8a) of said rods (7,8) engage sliding inside respective tracks (13) of the platform (2), **and in that** the lower ends (11a,12a) of said sliding bars (11,12) are arranged pivoted on the axle (4) of the wheels (5).

4. The vehicle according to claim 2, **characterized in that** the bracket (16) is integral with the axle (4) of the wheels (5) and said rods (7,8) are mutually pivoted on said pin (19) fixed to the aforesaid bracket (16) of the axle (4) of the wheels (5), wherein the lower ends (7a,8a) of said rods (7,8) engage sliding inside respective tracks (13) of the axle (4) **and in that** the upper ends (11a,12a) of said sliding bars (11,12) are arranged pivoted on the aforesaid platform (2).

5. The vehicle according to claim 1, **characterized in that** said rods (17,18) are arranged crossed over in an X-shaped scissor-like configuration at said pin (19) integral with the aforesaid bracket (16) of the axle (4) of the wheels (5) of the vehicle (1), wherein the ends (17a,17b,18a,18b) of said rods (17,18) are arranged sliding inside tracks (13) of said platform (2) and of the axle (4) of the wheels (5).

6. The vehicle according to one or more of the preceding claims, **characterized in that** said load balancing system is provided with bearings or bushings (14) for sliding engagement of said ends of the rods (7,8; 17,18) on the platform (2) and on the axle (4) of the wheels (3) of the vehicle (1).

7. The vehicle according to claim 6 and any of claims 3 to 5 **characterized in that** the platform (2) and/or the axle (4) of the wheels (5) is provided with slots (15) for access to the aforesaid assembly of tracks (13) and bearings (14).

## Patentansprüche

1. Transportfahrzeug, das mit einem System zum Ausgleichen von Lasten auf der Plattform des Fahrzeugs bereitgestellt wird, **dadurch gekennzeichnet, dass** das System zwei Stangen (7,8;17,18) umfasst, die sich gegenseitig in einer X-förmigen scherenartigen Konfiguration kreuzen und am Kreuzungspunkt an einem Stift (9,19) schwenkbar gelagert sind, der an der Plattform (2) oder an der Achse (4) der Räder (5) des Fahrzeugs (1) befestigt ist, an einer Halterung (10), die in die Plattform (2) integriert ist, oder an einer Halterung (16), die in die Achse (4) der Räder (5) integriert ist, wobei die Halterung (10,16) an der Achse (A) angeordnet ist, die senkrecht zu den Achsen (4) der Räder (5) steht und die durch die Verbindungslinie der jeweiligen Halbachsen verläuft, die durch ein Differential (21) verlaufen, wobei die Enden der Stangen (7,8;17,18) gleitend und/oder drehend auf der Plattform (2) und auf der Achse (4) der Räder (5) montiert sind.

2. Fahrzeug nach Anspruch 1, **dadurch gekennzeichnet, dass** die Stangen (7,8) eine Teleskopstruktur aufweisen, die mit Stäben (11,12) ausgestattet ist, welche gleitend innerhalb der Stangen (7,8) angeordnet sind.

3. Fahrzeug nach Anspruch 2, **dadurch gekennzeichnet, dass** die Halterung (10) in die Plattform (2) integriert ist und die Stangen (7,8) gegenseitig schwenkbar auf dem Stift (9) gelagert sind, der an der vorgenannten Halterung (10) der Plattform (2) befestigt ist, wobei die oberen Enden (7a,8a) der Stangen (7,8) gleitend in entsprechenden Führungen (13) der Plattform (2) eingreifen, **und dadurch, dass** die unteren Enden (11a,12a) der Gleitstangen (11,12) schwenkbar auf der Achse (4) der Räder (5) angeordnet sind.

4. Fahrzeug nach Anspruch 2, **dadurch gekennzeichnet, dass** die Halterung (16) in die Achse (4) der Räder (5) integriert ist und die Stangen (7,8) gegenseitig schwenkbar auf dem Stift (19) gelagert sind, der an der vorgenannten Halterung (16) der Achse (4) der Räder (5) befestigt ist, wobei die unteren Enden (7a,8a) der Stangen (7,8) gleitend in entsprechenden Führungen (13) der Achse (4) eingreifen **und dadurch, dass** die oberen Enden (11a,12a) der Gleitstangen (11,12) schwenkbar an der vorgenannten Plattform (2) angeordnet sind.

5. Fahrzeug nach Anspruch 1, **dadurch gekennzeichnet, dass** die Stangen (17,18) in einer X-förmigen scherenartigen Konfiguration an dem Stift (19) gekreuzt angeordnet sind, der in die vorgenannte Halterung (16) der Achse (4) der Räder (5) des Fahrzeugs (1) integriert ist, wobei die Enden (17a,17b,18a,18b) der Stangen (17,18) gleitend innerhalb von Führungen (13) der Plattform (2) und der Achse (4) der Räder (5) angeordnet sind.

6. Fahrzeug nach einem oder mehreren der vorstehenden Ansprüche, **dadurch gekennzeichnet, dass** das Lastenausgleichssystem mit Lagern oder Buchsen (14) für gleitenden Eingriff der Enden der Stangen (7,8; 17,18) auf der Plattform (2) und auf der Achse (4) der Räder (3) des Fahrzeugs (1) bereitgestellt wird.

7. Fahrzeug nach Anspruch 6 und einem der Ansprüche 3 bis 5, **dadurch gekennzeichnet, dass** die Plattform (2) und/oder die Achse (4) der Räder (5) mit Schlitzen (15) für den Zugang zu der vorgenannten Anordnung von Führungen (13) und Lagern (14) bereitgestellt wird.

## Revendications

1. Véhicule de transport pourvu d'un système d'équilibrage de charges sur la plate-forme dudit véhicule, **caractérisé en ce que** ledit système comprend deux tiges (7, 8 ; 17, 18) se croisant mutuellement selon une configuration en forme de ciseaux en X et pivotant, sur un point de croisement, par rapport à une broche (9, 19) fixée à la plate-forme (2) ou à l'essieu (4) des roues (5) dudit véhicule (1), au niveau d'un support (10) solidaire de ladite plate-forme (2) ou au niveau d'un support (16) solidaire de l'essieu (4) des roues (5), dans lequel ledit support (10, 16) est disposé au niveau de l'axe (A) perpendiculaire aux essieux (4) des roues (5) et qui passe à travers la ligne de jonction des demi-essieux respectifs passant à travers un différentiel (21), dans lequel les extrémités desdites tiges (7, 8 ; 17, 18) sont montées de manière coulissante et/ou rotative sur ladite plate-forme (2) et sur l'essieu (4) des roues (5).

2. Véhicule selon la revendication 1, **caractérisé en ce que** lesdites tiges (7, 8) ont une structure télescopique pourvue de barres (11, 12) disposées de manière à coulisser à l'intérieur des tiges (7, 8).

3. Véhicule selon la revendication 2, **caractérisé en ce que** le support (10) est solidaire de ladite plate-forme (2) et lesdites tiges (7, 8) pivotent mutuellement sur ladite broche (9) fixée au support (10) susmentionné de ladite plate-forme (2), dans lequel les extrémités supérieures (7a, 8a) desdites tiges (7, 8) viennent en prise coulissante à l'intérieur de rails (13) respectifs de la plate-forme (2), et **en ce que** les extrémités inférieures (11a, 12a) desdites barres (11, 12) coulissantes sont disposées de manière à pivoter sur l'essieu (4) des roues (5).

4. Véhicule selon la revendication 2, **caractérisé en ce que** le support (16) est solidaire de l'essieu (4) des roues (5) et lesdites tiges (7, 8) pivotent mutuellement sur ladite broche (19) fixée au support (16) susmentionné de l'essieu (4) des roues (5), dans lequel les extrémités inférieures (7a, 8a) desdites tiges (7, 8) viennent en prise coulissante à l'intérieur de rails (13) respectifs de l'essieu (4) et **en ce que** les extrémités supérieures (11a, 12a) desdites barres (11, 12) coulissantes sont disposées de manière à pivoter sur la plate-forme (2) susmentionnée.

5. Véhicule selon la revendication 1, **caractérisé en ce que** lesdites tiges (17, 18) sont disposées de manière à se croiser dans une configuration en forme de ciseaux en X au niveau de ladite broche (19) solidaire du support (16) susmentionné de l'essieu (4) des roues (5) du véhicule (1), dans lequel les extrémités (17a, 17b, 18a, 18b) desdites tiges (17, 18) sont disposées de manière à coulisser à l'intérieur de rails (13) de ladite plate-forme (2) et de l'essieu (4) des roues (5).

6. Véhicule selon l'une ou plusieurs des revendications précédentes, **caractérisé en ce que** ledit système d'équilibrage de charge est pourvu de paliers ou bagues (14) pour la mise en prise coulissante desdites extrémités des tiges (7, 8 ; 17, 18) sur la plate-forme (2) et sur l'essieu (4) des roues (3) du véhicule (1).

7. Véhicule selon la revendication 6 et l'une quelconque des revendications 3 à 5, **caractérisé en ce que** la plate-forme (2) et/ou l'essieu (4) des roues (5) est pourvu de fentes (15) pour l'accès à l'ensemble susmentionné de rails (13) et de paliers (14).
